# EUROPEAN PATENT APPLICATION

(11) **EP 4 636 045 A1**
(43) Date of publication of application: **22.10.2025**
(21) Application number: 24171041.7
(22) Date of filing: 18.04.2024
(51) Int. Cl.: C09D 5/36

(54) **SPARKLING CLEAR COAT COMPOSITION AND MULTILAYER AUTOMOTIVE COATING INCLUDING THE SAME**

(71) Applicant: NIPPON PAINT AUTOMOTIVE EUROPE GmbH, 50827 Köln (DE)
(72) Inventor: Roland, Jean-Francois, 50827 Köln (DE); Batocchi, Pierre, 50827 Köln (DE)
(74) Representative: RCD-Patent Giesen, Schmelcher & Griebel Patentanwälte PartG mbB

(57) **Abstract**

The invention relates to a clear coat composition to be applied as a topmost layer in an automotive multilayer coating comprising a 1K or 2K binder system, a non-aqueous solvent, a platelet effect pigment, a rheology control additive, and a dispersant additive, wherein the 1K or 2K binder system is an acrylate binder system, wherein the platelet effect pigment is present in an amount of from 0.001 weight-% to 5.00 weight-%, based on the total content of the composition, wherein the rheology control additive is a crystalline polyurea-based compound, characterized in that the ratio of rheology control additive, given in weight-%, to dispersant additive, given in weight-%, is between 5.0 : 1.0 and 20.0 : 1.0, based on the respective solid content in weight-% of the rheology control additive and the dispersant additive of the clear coat composition.

## Description

The invention relates to a sparkling clear coat composition to be applied as a topmost layer in an automotive multilayer coating and a multilayer automotive coating comprising the same.

### Technical Background

In modern automotive coatings since many years there is a growing interest in the automotive field for coatings having a brilliant appearance and a high degree of luster and sparkle. In order to achieve coatings of such high quality appearance generally a wide variety of special effect pigments are used. Special effect pigments range from metal flake pigments like aluminum based pigments over mica and pearlescent pigments to coated glass flake pigments. In practice the pigments nearly always are included in the base coat layer of the multilayer automotive coating but not in the topmost clear coat layer. In principle, the higher the amount of the effect pigment in the respective coating layer, the higher is the degree of sparkle achieved in the final multilayer coating. There is, however, a limit of the degree of sparkle and luster that can be achieved because the amount of effect pigment that can be included in the coating composition is generally limited at least by the factors of large-scale industrial applicability, price and stability of the coating composition.

There are only very few descriptions where an effect pigmented clear coat composition for automotive application is mentioned, and even fewer examples can be found where the pigmented clear coat is the topmost layer of the multilayer automotive coating. One approach for achieving a high sparkle effect is described in JP 2004081971 A and in JP 2001 162219 A. Both documents provide a method for forming a brilliant coating film capable of developing a three-dimensional glittering luminance feeling having interfering action. According to JP 2001 162219 A, there is provided a multilayer coating comprising a brilliant base coating layer, a brilliant clear coating layer containing a metal oxide coated glass flake pigment on top of the base coating layer and a clear coating layer on top of the brilliant clear coating layer. JP 2004081971 A discloses a multilayer coating comprising a color base coating layer with an L value of 1 to 40, a brilliant base coating layer containing 0.001 to 5 mass-% metal covered glass flake pigment on top of the base coating layer and a clear coating layer on top of the brilliant clear coating layer. Thus, both documents describe glittering clear coat layers which are, however, not the topmost layer of the multilayer coating system.

An example of incorporating glass flake pigments in powder clear coating compositions is described in US 5,368,885 A. Another example, where glass flake pigments are incorporated in a liquid clear coating composition is disclosed in EP 3 075 791 A1. These clear coating compositions are mentioned to be used as a top coat in multilayer coatings. According to this document, the inclusion of glass flakes in the top layer of the multilayer coatings leads to increased luster and sparkle compared to the use of glass flakes in basecoat layers even with relatively low pigment content.

Automotive multilayer coatings generally comprise, starting from the metallic substrate, a separately cured electrocoat film, optionally a film which is applied directly to the electrocoat film and is cured separately, usually referred to as primer, at least one film layer which comprises color pigments and/or effect pigments and which is generally referred to as basecoat film, and a clearcoat film. At least the basecoat layer(s) and the clear coat layer in modern coating techniques are applied wet-on-wet, i.e. there is no baking step carried out before the clear coating composition is applied to the basecoat layer. Depending on the number of layers applied without intermediate baking, the standard modern technique is described in short as "two coat one bake - 2C1B" or "three coat one bake - 3C1B". Especially for the topmost layer rheology has to be adapted in such wet-on-wet methods because it is vital that for the time of application via the application devices, the viscosity of the coating composition is low enough for quick and even application whereas the viscosity should be much higher at the time of arriving and settling to the still wet underlying basecoat to avoid sagging and generation of so called "noses" or drops. Rheology control is usually achieved by rheology control additives which are well known in the art. For pigmented clear coats especially with platelet effect pigments, however, the situation is not so well known because there is inevitably some interaction between the platelet pigments and the rheology control additives.

Like that, the pigmented clear coats have not yet found their way into being used in the industry which can be explained, for instance, by issues of their application to the car bodies with the wet-on-wet application technics used in modern high-volume production or in some other factors like a short shelf life, stable and even pigment distribution within the settled clear coat layer or pigment orientation and possible pigment migration from the colored basecoat into the topmost clear coat and vice-versa. Although the known multilayer coatings containing layers comprising platelet flake pigments as effect pigments in the basecoat layer(s) have numerous beneficial properties, there is still a need to provide multilayer coatings having a brilliant appearance and a high degree of luster and sparkle as well as having further improvements regarding their ability being safely applied in a modern wet-on-wet technique.

Therefore, it is an object of the present invention to provide a clear coating composition to be applied as a topmost layer in a wet-on-wet automotive multilayer coating which gives high sparkle and high degree luster by incorporating platelet flake pigments into the clear coat layer and which simultaneously has the ability to fulfil the specific rheology requirements of the industry as well as prevent pigment migration to and from the underlying basecoat, keep the platelet pigments evenly distributed and well orientated.

### Description of the Invention

It has been found that the stated objects can be achieved by a clear coat composition to be applied as a topmost layer in an automotive multilayer coating comprising a 1K or 2K binder system, a non-aqueous solvent, a platelet effect pigment, a rheology control additive, and a dispersant additive, wherein the 1 K or 2K binder system is an acrylate binder system, wherein the platelet effect pigment is present in an amount of from 0.001 weight-% to 5.00 weight-%, based on the total content of the composition, wherein the rheology control additive is a crystalline polyurea-based compound. According to the invention the ratio of rheology control additive, given in weight-%, to dispersant additive, given in weight-%, is between 5.0 : 1.0 and 20.0 : 1.0, based on the respective solid content in weight-% of the rheology control additive and the dispersant additive of the clear coat composition.

It has been surprisingly found that with the claimed ratio of rheology control additive to dispersant additive present in the clear coating composition it gives high sparkle and a high degree of luster by incorporating platelet flake pigments into the topmost clear coat layer and simultaneously has the ability to fulfil the specific rheology requirements of the industry when the coating is applied wet-on-wet as a topmost layer, as well as prevent pigment migration to and from the underlying basecoat, keep the platelet pigments evenly distributed and well orientated.

Rheology control is one of the central aspects of a coating composition in the automotive field, especially for a coating that is applied in a wet-on-wet technology as the topmost layer. The thixotropic behaviour of the composition is desirable for the coating composition to be easily applied with industrial applicators, to flow sufficiently to form a uniform and even layer with good optical properties, then to resist further flow thereby preventing sagging on a vertical part of the surface. The rheology control is achieved by addition of a special rheology control additive to the clear coat composition. Such rheology control additives are well known in the art and have been widely described.

The suitability of a given rheology modification agent is dependent on many factors. It should be able to create an ideal rheological profile that itself is dependent on inter alia: the shear regime associated with the method by which the liquid coating is applied to a substrate; the thickness of the coating to be applied; the orientation of the substrate with respect to the horizontal; the surface tension; the colloidal interaction between particles solvents, resins and additives; the thermal regime associated with any concomitant curing of the coating composition after application; the amount and volatility of solvents applied; the response of viscosity to loss of solvents and raise in temperature; surface tension gradients developing upon solvent evaporation; the curing rate; and, the shear forces acting on the liquid coating. The agent must also be able to create enough robustness to allow for variations in these parameters while still maintaining results close to the optimal. In addition to the rheological performance of a coating, its optical performance is also of the utmost importance. A sag control additive must be fine enough not to create any visible disturbance (such as protrusion) when applied in thin films. For clear coat applications, no detectable haze or turbidity should be present after completion of the curing cycle, and no color formation (or yellowing) should have resulted from its presence. Again, these characteristics should not change irreversibly with storage time.

Before this background, in the present invention the rheology control additive is a crystalline polyurea-based compound. Their thixotropic character is characterized by fast time-dependent viscosity recovery ensuring that, as the coating becomes levelled, it does not sag whilst still wet on the surface. Their thixotropic behaviour does not preclude some flow occurring at the late stages of curing, after shrinkage has occurred due to solvent loss for example; this is considered favourable for the levelling out of surface unevenness telegraphed from the underlying substrate. Furthermore these characteristics do not change significantly with storage time of the liquid coating composition. Favourably for the composition of the present invention, the polyurea-based rheology control additive also interacts with the platelet pigment included in the coating composition, thus helping to achieve a good and stable pigment orientation adding and safeguarding the high quality appearance and brilliance of the resulting clear coat layer. Examples of suitable rheology control additives can, for instance, be found in the description of EP 1902081 B2 or EP 3926019 A1. In most cases, the rheology control additive is present in the coating composition as a modification of a binder, especially as a modification of an acrylate binder. Examples of such rheology control/binder combinations are described for instance in US 8742052 B2 or US 8207268 B2. Such rheology control additives alone or as binder/rheology control combinations are commercially available from well-known manufacturers like Allnex, Nuplex, Lubrizol, BYK, etc.

A dispersant additive by definition is a coating ingredient which is used to avoid the flocculation of pigments and fillers. In other words, dispersants promote and stabilize the suspension of solid particles in the coating medium. Dispersant additives are well known in the art. They contribute to keeping the pigments and fillers of a coating composition stable until use of the coating composition, during the application, and also during the formation of the dried coating. Further, many other coating properties are affected by the choice and amount of the dispersant additives like gloss and water resistance. Dispersants function by reducing the attraction between solid particles like pigments, fillers, or additives in any dispersion. This prevents the solid particles from agglomerating or settling out. Generally, when solid particles are added to any liquid medium, they tend to attract each other due to intramolecular forces. Dispersants function is to initially separate these particles from each other and continuously avoid further agglomeration. For this, they generally have two parts in their molecule, anchoring groups and soluble tails. First, anchoring groups adsorb to the pigments and fillers surface. They form strong physical bonds with chemical groups that are present on the surface of the particles, the so-called anchor sites. Second, soluble tails create a layer around the solid particles preventing dispersed particles to glue together again and ensuring colloidal stability. These repulsive forces working against the natural attraction of particles are of two kinds: electrostatic repulsion: The surface of particles is equally charged and they repel each other, and steric repulsion: The tails form a layer around the solid particles and prevent particles to collide with each other. The non-adsorbing moieties of the dispersing agent should demonstrate excellent compatibility with the binder system. This is essential for optimal stability in the liquid phase as well as best film performance. Any incompatibility may result in pigment flocculation in the wet composition, even during film formation. Like that, the dispersant additive of the present invention is chosen in relation to the nature of the platelet pigment, the solvent, and the nature of the acrylic binder system.

One effect also related to the use of a dispersant additive, however, is the fact that the dispersant additive is generally reducing the viscosity of the coating composition. This can prove to be compromising the rheology behaviour which is finely controlled by the rheology control additive. Surprisingly, it was found that for a solventborne clear coating composition with platelet pigments in a 1 K or 2K acrylic binder system for a wet-on-wet application a ratio of rheology control additive to dispersant additive in the claimed range shows excellent rheological behaviour, keeping the pigment orientation up, giving an even pigment distribution while at the same time prevent pigment migration to and from the underlying basecoat. Moreover, the composition with a claimed ratio of rheology additive to dispersant additive pigment segregation, especially during film formation, is safely prevented. The ratio further leads to excellent results in preventing the pigments to interfere with the gloss and DOI (distinctness of image) value of the resulting clear coat.

DOI can be measured using a similar principle to gloss measurement by projecting light onto a surface at a particular angle. The reflected light is collected at an angle equal but opposite to the normal specular angle using a wider angular band of measurement. This enables the amount of light deflected away from the specular angle to be determined.

The coating composition of the present invention comprises a 1K or 2 K binder acrylate system. The binder itself has film forming properties. Examples of film-forming resins include acrylic resins, acrylate polyester resins, and the like. The film-forming resin preferably contains a crosslinkable functional group, such as hydroxy, carboxy, or epoxy. When a crosslinking agent is used as a part of the binder component, a resin that contains a crosslinkable functional group, such as hydroxy, carboxy, or epoxy, and that can form a crosslinked coating film by reaction with the crosslinking agent, can be generally used as the film-forming resin. From the viewpoint of, for example, the water resistance of the resulting coating film, the coating composition of the present invention is preferably a crosslinkable paint containing the acrylic base resin and the crosslinking agent. In particular, the coating composition of the present invention preferably contains a hydroxy-containing resin as at least a part of the acrylic base resin, and a crosslinking agent reactive with the hydroxy-containing resin as at least a part of the crosslinking agent. The hydroxy-containing resin is a resin having at least one hydroxy group per molecule. Various known resins can be used as the hydroxy-containing resin. Examples include hydroxy-containing acrylic resins, hydroxy-containing acrylic-modified polyester resins, and the like.

The hydroxy-containing acrylic resin can be obtained, for example, by copolymerizing a hydroxy-containing polymerizable unsaturated monomer and another polymerizable unsaturated monomer (a polymerizable unsaturated monomer other than the hydroxy-containing polymerizable unsaturated monomer). The hydroxy-containing polymerizable unsaturated monomer is a compound containing one or more hydroxy groups and one or more polymerizable unsaturated bonds per molecule. Examples of hydroxy-containing polymerizable unsaturated monomers include monoesterified products of (meth)acrylic acid with a dihydric alcohol having 2 to 8 carbon atoms (e.g., 2-hydroxyethyl (meth)acrylate, 2-hydroxypropyl (meth)acrylate, 3-hydroxypropyl (meth)acrylate, and 4-hydroxybutyl (meth)acrylate); ε-caprolactone-modified products of such monoesterified products of (meth)acrylic acid with a dihydric alcohol having 2 to 8 carbon atoms; adducts of (meth)acrylic acid with an epoxy-containing compound (e.g., Cardura E10P, trade name, produced by Momentive Specialty Chemicals Inc., neodecanoic acid glycidyl ester); N-hydroxymethyl (meth)acrylamide; allyl alcohol; (meth)acrylates that include a hydroxy-terminated polyoxyethylene chain; and the like. These polymerizable unsaturated monomers may be used singly, or in a combination of two or more.

The term "(meth)acrylate" as used herein means acrylate or methacrylate. The term "(meth)acrylic acid" means acrylic acid or methacrylic acid. The term "(meth)acryloyl" means acryloyl or methacryloyl. The term "(meth)acrylamide" means acrylamide or methacrylamide.

An acid group-containing polymerizable unsaturated monomer is a compound having one or more acid groups and one or more polymerizable unsaturated bonds per molecule. Examples of the monomer include carboxy-containing monomers, such as (meth)acrylic acid, crotonic acid, itaconic acid, maleic acid, and maleic anhydride; sulfonic acid-containing monomers, such as vinyl sulfonic acid and 2-sulfoethyl (meth)acrylate; acidic phosphate monomers, such as 2-(meth)acryloyloxyethyl acid phosphate, 2-(meth)acryloyloxypropyl acid phosphate, 2-(meth)acryloyloxy-3-chloropropyl acid phosphate, and 2-methacryloyloxyethylphenyl phosphoric acid. These monomers may be used singly, or in a combination of two or more. When an acid group-containing polymerizable unsaturated monomer is used, the monomer is preferably used in such an amount that the hydroxy-containing acrylic resin has an acid value of 0.5 to 15 mg KOH/g, and more preferably 1 to 10 mg KOH/g.

Specific examples include methyl (meth)acrylate, ethyl (meth)acrylate, propyl (meth)acrylate, n-butyl (meth)acrylate, iso-butyl (meth)acrylate, tert-butyl (meth)acrylate, 2-ethylhexyl (meth)acrylate, isooctyl (meth)acrylate, isomyristyl (meth)acrylate, stearyl (meth)acrylate, Isostearyl Acrylate (trade name, produced by Osaka Organic Chemical Industry, Ltd.), lauryl (meth)acrylate, tridecyl (meth)acrylate, tetrahydrofurfuryl (meth)acrylate, cyclohexyl (meth)acrylate, isobornyl (meth)acrylate, and the like.

When an aromatic vinyl monomer is used as a constituent component, the glass transition temperature of the resulting resin is raised, and a hydrophobic coating film with a high refractive index can be obtained. This provides an effect of improving the finished appearance due to increased gloss of the coating film. Specific examples include styrene, α-methylstyrene, vinyltoluene, and the like.

Examples of nitrogen containing monomers include (meth)acrylamide, N,N-dimethyl(meth)-acrylamide, N-[3-(dimethylamino)propyl](meth)acrylamide, N-butoxymethyl(meth)acrylamide, diacetone(meth)acrylamide, N,N-dimethylaminoethyl(meth)acrylate, vinylpyridine, vinylimidazole, acrylonitrile, methacrylonitrile, and the like.

Other vinyl monomer compounds include vinyl acetate, vinyl propionate, vinyl chloride, vinyl versatates, and the like. Examples of vinyl versatates include the commercially available products VEOVA 9 and VEOVA 10 (trade names, produced by Japan Epoxy Resin Co., Ltd.), and the like.

From the viewpoint of the finished appearance of the resulting coating film, a secondary hydroxy-containing acrylic resin can also be suitably used as one of the embodiments of the hydroxy-containing acrylic resin. The secondary hydroxy-containing acrylic resin can be produced, for example, by using a secondary hydroxy-containing polymerizable unsaturated monomer as one type of the hydroxy-containing polymerizable unsaturated monomer described above in the production of the hydroxy-containing acrylic resin. Examples of the secondary hydroxy-containing polymerizable unsaturated monomer include polymerizable unsaturated monomers having a secondary hydroxy group whose alkyl group in the ester moiety has 2 to 8, preferably 3 to 6, and more preferably 3 or 4 carbon atoms, such as 2-hydroxypropyl (meth)acrylate, 2-hydroxybutyl (meth)acrylate, and 3-hydroxybutyl (meth)acrylate; adducts of (meth)acrylic acid with an epoxy-containing compound (e.g., Cardura E10P, trade name, produced by Momentive Specialty Chemicals Inc., neodecanoic acid glycidyl ester); and the like. These may be used singly, or in a combination of two or more. From the viewpoint of the finished appearance of the resulting coating film, 2-hydroxypropyl (meth)acrylate is preferably used. When the secondary hydroxy-containing polymerizable unsaturated monomer described above is used in producing the secondary hydroxy-containing acrylic resin, it is preferred that the amount of the secondary hydroxy-containing polymerizable unsaturated monomer is within the range of 15 to 45 mass%, and preferably 20 to 40 mass%, based on the total amount of the copolymerizable monomer components that constitute the secondary hydroxy-containing acrylic resin, from the viewpoint of the finished appearance of the resulting coating film.

As another embodiment of the hydroxy-containing acrylic binder resin, a hydroxy- and alkoxysilyl-containing acrylic resin can be preferably used in order to ensure a good scratch resistance of the resulting coating film. The hydroxy- and alkoxysilyl-containing acrylic resin is a resin having at least one hydroxy group and at least one alkoxysilyl group per molecule. The use of the hydroxy- and alkoxysilyl-containing acrylic resin forms a crosslinkage due to a condensation reaction between alkoxysilyl groups and a reaction between an alkoxysilyl group and a hydroxyl group, thus also increasing the curability of the coating film. Examples of the alkoxy moiety of the alkoxysilyl group present in the hydroxy- and alkoxysilyl-containing acrylic binder resin include an alkoxy moiety having about 1 to 6 carbon atoms, preferably about 1 to 3 carbon atoms, such as methoxy, ethoxy, and propoxy. The alkoxy moiety is more preferably methoxy and ethoxy, and particularly preferably methoxy in order to increase the scratch resistance of the resulting coating film. The alkoxysilyl group include a trialkoxysilyl group, a dialkoxysilyl group, and a monoalkoxysilyl group. The alkoxysilyl group is preferably a trialkoxysilyl group. When the alkoxysilyl group is a dialkoxysilyl group or a monoalkoxysilyl group, the groups other than the alkoxy that binds to the silicon atom include alkyl having about 1 to 6 carbon atoms, preferably about 1 to 3 carbon atoms (e.g. methyl, ethyl, and propyl). The hydroxy- and alkoxysilyl-containing acrylic binder resin can be obtained, for example, by using an alkoxysilyl-containing polymerizable unsaturated monomer as one type of the polymerizable unsaturated monomer and other polymerizable unsaturated monomers in the method for producing the hydroxy-containing acrylic resin. The alkoxysilyl-containing polymerizable unsaturated monomer is a compound having at least one alkoxysilyl group and at least one polymerizable unsaturated bond per molecule. Examples of alkoxysilyl-containing polymerizable unsaturated monomers include vinyltrimethoxysilane, vinyltriethoxysilane, acryloxyethyltrimethoxysilane, methacryloxyethyltrimethoxysilane, acryloxypropyltrimethoxysilane methacryloxypropyltrimethoxysilane, acryloxypropyltriethoxysilane, methacryloxypropyltriethoxysilane, and vinyltris(β-methoxyethoxy)silane. The alkoxysilyl-containing polymerizable unsaturated monomer is preferably vinyltrimethoxysilane, γ-acryloxypropyltrimethoxysilane, and γ-methacryloxypropyltrimethoxysilane, and more preferably γ-methacryloxypropyltrimethoxysilane. The alkoxysilyl-containing polymerizable unsaturated monomer for use may be a commercially available product. Examples include KBM-1003, KBE-1003, KBM-502, KBM-503, KBE-502, KBE-503, KBM-5103, and KBM-5803 (all produced by Shin-Etsu Chemical Co., Ltd.); Y-9936 and A-174 (produced by Momentive Performance Materials Inc.); and OFS-6030 and Z-6033 (produced by Dow Toray Co., Ltd.). These alkoxysilyl-containing polymerizable unsaturated monomers can be used alone, or in combination of two or more.

Specifically, the hydroxy- and alkoxysilyl-containing acrylic binder resin can be obtained, for example, by copolymerizing the hydroxy-containing polymerizable unsaturated monomer, the alkoxysilyl-containing polymerizable unsaturated monomer, and other polymerizable unsaturated monomers (polymerizable unsaturated monomers other than the hydroxy-containing polymerizable unsaturated monomer and alkoxysilyl-containing polymerizable unsaturated monomer). The other polymerizable unsaturated monomers that can be used in copolymerization are, for example, other polymerizable unsaturated monomers as described above. In producing the hydroxy- and alkoxysilyl-containing acrylic binder resin, the amount of the hydroxy-containing polymerizable unsaturated monomer for use is preferably within the range of 5 to 60 mass%, more preferably 15 to 50 mass%, and still more preferably 25 to 45 mass%, based on the total amount of the copolymerizable monomer components that constitute the hydroxy- and alkoxysilyl-containing acrylic resin, in order to achieve good scratch resistance, water resistance, curability, and finished appearance of the resulting coating film properties.

Examples of film-forming resins usable as the binder component other than those described above in the coating composition of the present invention include hydroxy-free acrylic resin, hydroxy-containing or hydroxy-free (acrylate-modified) polyester resin, hydroxy-containing or hydroxy-free polyether resin, and hydroxy-containing or hydroxy-free polyurethane resin.

In the coating composition of the present invention, the acrylate binder component can contain a crosslinking agent. The crosslinking agent is a compound that can react with a crosslinkable functional group in the binder component, and that can form a cross-linking structure by the reaction. It is preferable that the crosslinkable functional group in the binder component is a hydroxy group, and that the crosslinking agent is a compound having reactivity with a hydroxy group.

Specifically, for example, the crosslinking agent is preferably a polyisocyanate compound, a blocked polyisocyanate compound, or an amino resin. In particular, the crosslinking agent preferably contains a polyisocyanate compound.

The polyisocyanate compound is a compound having at least two isocyanate groups per molecule. Examples include aliphatic polyisocyanate compounds, alicyclic polyisocyanate compounds, aromatic-aliphatic polyisocyanate compounds, aromatic polyisocyanate compounds, derivatives of these polyisocyanate compounds, and the like.

Examples of aliphatic polyisocyanate compounds include aliphatic diisocyanate compounds, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanate compounds, such as 2-isocyanatoethyl 2,6-diisocyanatohexanoate, 1,6-diisocyanato-3-isocyanatomethylhexane, 1,4,8-triisocyanato-octane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane. Examples of alicyclic polyisocyanate compounds include alicyclic diisocyanate compounds, such as 1,3-cyclopentene diisocyanate, 1,4-cyclohexane diisocyanate, 1,3-cyclohexane diisocyanate, 3-isocyanatomethyl-3,5,5-tri-methylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, and methylenebis(4,1-cyclohexanediyl)diisocyanate (common name: hydrogenated MDI), and norbornane diisocyanate; alicyclic triisocyanate compounds, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanato-propyl)-2,5-di(isocyanato-methyl)-bicyclo(2.2.1)heptane, 5-(2-isocyanatoethyl)-2-isocyanatomethy-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of aromatic-aliphatic polyisocyanate compounds include aromatic-aliphatic diisocyanate compounds, such as methylenebis(4,1-phenylene)diisocyanate (common name: MDI), 1,3- or 1,4-xylylene diisocyanate or mixtures thereof, w,w'-diisocyanato-1,4-diethylbenzene, and 1,3- or 1,4-bis(1-isocyanato-1-methylethyl)benzene (common name: tetramethylxylylene diisocyanate) or mixtures thereof; aromatic-aliphatic triisocyanate compounds, such as 1,3,5-triisocyanatomethylbenzene. Examples of aromatic polyisocyanate compounds include aromatic diisocyanate compounds, such as m-phenylene diisocyanate, p-phenylene diisocyanate, 4,4'-diphenyldiisocyanate, 1,5-naphthalene diisocyanate, 2,4-tolylenediisocyanate (common name: 2,4-TDI) or 2,6-tolylene diisocyanate (common name: 2,6-TDI) or mixtures thereof, 4,4'-toluidine diisocyanate, and 4,4'-diphenylether diisocyanate; aromatic triisocyanate compounds, such as triphenylmethane-4,4',4"-triisocyanate, 1,3,5-triisocyanatobenzene, and 2,4,6-triisocyanatotoluene; aromatic tetraisocyanate compounds, such as 4,4'-diphenylmethane-2,2',5,5'- tetraisocyanate. Examples of derivatives of the polyisocyanate compounds include dimers, trimers, biurets, allophanates, uretdiones, uretimine, isocyanurates, oxadiazinetriones, polymethylene polyphenyl polyisocyanates (crude MDI, polymeric MDI), crude TDI, and the like, of the polyisocyanate compounds mentioned above. The polyisocyanate compounds and derivatives thereof mentioned above may be used singly, or in a combination of two or more.

For good properties of the resulting coating film, the polyisocyanate compound for use is preferably at least one member selected from the group consisting of an aliphatic polyisocyanate compound, an alicyclic polyisocyanate compound, and a derivative thereof. With the aim of an increase in the solids content of the obtained coating composition, and the finished appearance and scratch resistance of the resulting coating film, the polyisocyanate compound for use is more preferably an aliphatic polyisocyanate compound and/or a derivative thereof. The aliphatic polyisocyanate compound and/or a derivative thereof for use is preferably an aliphatic diisocyanate compound and/or an isocyanurate thereof, and more preferably hexamethylene diisocyanate and/or an isocyanurate thereof.

When the coating composition of the present invention contains a blocked or unblocked polyisocyanate compound described above as the crosslinking agent, the proportion of the polyisocyanate compound is preferably within the range of 5 to 60 parts by weight, more preferably 15 to 50 parts by weight, and still more preferably 25 to 45 parts by weight, per 100 parts by weight of the total solids content of the composition.

Examples of blocking agents include phenol compounds, such as phenol, cresol, xylenol, nitrophenol, ethylphenol, hydroxydiphenyl, butylphenol, isopropylphenol, nonylphenol, octylphenol, and methyl hydroxybenzoate; lactam compounds, such as ε-caprolactam, δ-valerolactam, γ-butyrolactam, and β-propiolactam; aliphatic alcohol compounds, such as methanol, ethanol, propyl alcohol, butyl alcohol, amyl alcohol, and lauryl alcohol; ether compounds, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol compounds, such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime compounds, such as formamide oxime, acetamide oxime, acetoxime, methyl ethyl ketoxime, diacetyl monoxime, benzophenone oxime, and cyclohexane oxime; active methylene compounds, such as dimethyl malonate, diethyl malonate, ethyl acetoacetate, methyl acetoacetate, and acetylacetone; mercaptan compounds, such as butyl mercaptan, t-butyl mercaptan, hexyl mercaptan, t-dodecyl mercaptan, 2-mercaptobenzothiazole, thiophenol, methylthiophenol, and ethylthiophenol; acid amide compounds, such as acetanilide, acetanisidide, acetotoluide, acrylamide, methacrylamide, acetic acid amide, stearic acid amide, and benzamide; imide compounds, such as succinimide, phthalimide, and maleimide; amine compounds, such as diphenylamine, phenylnaphthylamine, xylidine, N-phenylxylidine, carbazole, aniline, naphthylamine, butylamine, dibutylamine, and butylphenylamine; imidazole compounds, such as imidazole and 2-ethylimidazole; urea compounds, such as urea, thiourea, ethylene urea, ethylenethiourea, and diphenylurea; carbamate compounds, such as phenyl N-phenylcarbamate; imine compounds, such as ethyleneimine and propyleneimine; sulfite compounds, such as sodium bisulfite and potassium bisulfite; azole compounds. Examples of azole compounds include pyrazole or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives, such as imidazole, benzimidazole, 2-methylimidazole, 2-ethylimidazole, and 2-phenylimidazole; imidazoline derivatives, such as 2-methylimidazoline and 2-phenylimidazoline. Particularly preferable blocking agents are, for example, oxime-based blocking agents, active methylene-based blocking agents, and pyrazole or pyrazole derivatives.

Amino resins usable as the crosslinking agent include partially or fully methylolated amino resins obtained by a reaction of an amino component with an aldehyde component. Examples of amino components include melamine, urea, benzoguanamine, acetoguanamine, steroguanamine, spiroguanamine, dicyandiamide, and the like. Examples of aldehyde components include formaldehyde, paraformaldehyde, acetaldehyde, benzaldehyde. Preferred amino resins are melamine resins. Examples of usable melamine resins include alkyl-etherified melamine resins obtained by etherifying some or all of the methylol groups of partially or fully methylolated melamine resins with the alcohol. Preferable examples of alkyl-etherified melamine resins include methyl-etherified melamine resins obtained by etherifying some or all of the methylol groups of partially or fully methylolated melamine resins with methyl alcohol; butyletherified melamine resins obtained by etherifying some or all of the methylol groups of partially or fully methylolated melamine resins with butyl alcohol; methyl-butyl mixed etherified melamine resins obtained by etherifying some or all of the methylol groups of partially or fully methylolated melamine resins with methyl alcohol and butyl alcohol. The melamine resin has a weight average molecular weight of preferably 400 to 6000, more preferably 500 to 5000, and even more preferably 800 to 4000. A commercially available product can be used as the melamine resin. Examples of the commercially available product include Cymel 202, Cymel 203, Cymel 238, Cymel 251, Cymel 303, Cymel 323, Cymel 324, Cymel 325, Cymel 327, Cymel 350, Cymel 385, Cymel 1156, Cymel 1158, Cymel 1116, Cymel 1130, (all produced by Allnex Japan Inc.), U-VAN 120, U-VAN 20HS, U-VAN 20SE60, U-VAN 2021, U-VAN 2028, U-VAN 28-60 (all produced by Mitsui Chemicals, Inc.), and like products of other manufacturers. The melamine resins described above may be used alone, or in a combination of two or more.

When the coating composition of the present invention contains an amino resin described above as the crosslinking agent, its proportion is preferably within the range of 0.5 to 40 parts by weight, more preferably 1 to 20 parts by weight, still more preferably 1.5 to 15 parts by weight, and even more preferably 5 to 12 parts by weight, per 100 parts by weight of the total solids content of the binder component. The crosslinking agents may be used alone, or in a combination of two or more.

The coating composition of the present invention comprises a non-aqueous solvent. In other words, the coating composition is a solventborne or solvent-based composition. Solventborne coating compositions offer some benefits in comparison to waterborne coatings like fast drying and curing, good solvating power for the acrylic binder system, and avoiding of surface defects of the resulting film like blushing, cratering, etc.

Suitable examples of non-aqueous solvents include ketones, esters, glycol ethers, alcohols, and hydrocarbons, like propylene glycol ethers, ethylene glycol ethers, glycol acetates, propionates, diisobutyl ketone, methyl ethyl ketone, acetone, solvent naphta, butyl acetate, methoxypropyl acetate.

The coating composition of the present invention comprises a platelet effect pigment. Effect pigments owe their particular optical effect to the angle-selective reflection of light at their platelet-shaped particles which are in a parallel arrangement in the application medium. This creates angle-dependent light-dark effects or else color changes, known as flops, depending on the chemical construction of the pigment. There is a wide variety of suitable platelet effect pigments known to the skilled person. They mainly belong to different classes: metal-based platelets, especially aluminium-based platelets, mica pigments and glass-based platelets. All types usually are coated with various materials like oxides, sulfides, or metals, often with more than one coating layer, to achieve a pronounced sparkle, good stability, but mainly to give a high luster and brilliant effect with a wide range of color choice.

Examples of effect pigments include titanium dioxide or iron dioxide coated mica pigments (pearl luster pigments), titanium dioxide or iron oxide coated aluminium pigments, titanium dioxide or iron oxide coated aluminium oxide platelets and uncoated aluminium flakes. There is particular interest in effect pigments having a pronounced angle-dependent change of color, such as platelet-shaped pigments which have a multilayered construction and which may be based on fully enrobed substrate platelets for example of aluminium, doped iron oxide, silicon dioxide, synthetic or natural silicates, such as mica, or glass, such as aluminium and iron oxide platelets coated with silicon dioxide and iron oxide, mica platelets coated with titanium dioxide, silicon dioxide and a metal, with iron oxide, silicon dioxide and a metal, with iron oxide, silicon dioxide and titanium dioxide, with titanium dioxide, silicon dioxide and iron oxide, with a metal, silicon dioxide and titanium dioxide, with a metal, silicon dioxide or iron oxide or with a metal, silicon dioxide and a metal, or consist of multilayer systems which comprise for example the layer sequences of iron oxide/ silicon dioxide/iron oxide, iron oxide/titanium dioxide/iron oxide, titanium dioxide/silicon dioxide/titanium dioxide, chromium/magnesium fluoride/aluminum/magnesium fluoride/chromium or chromium/magnesium fluoride/chromium, or Aluminium-based pigments coated with a nano-thickness glass layer as bright interference pigments of various colors.

Suitable glass flake pigments are favourably such that show a high degree of sparkle and luster. Such sparkle glass flake pigments usually comprise a flake or platelet shaped glass core and a coating of the core. The coating can be varied and/or tinted so that different color shades and brightness shades can be achieved. Preferably, the at least one platelet glass flake pigment are selected from coated glass flake pigments, said coating being selected from the group consisting of titanium dioxide, zinc oxide, tin oxide, iron oxide, silicon oxide, copper, gold, silver, platinum, aluminium, alumina and mixtures thereof, preferably titanium oxide and/or tin oxide. By choice of coating material and layer thickness, color of the pigment can be tuned. A wide variety of colors achieved by coating the platelet glass flakes with the aforestated metals, metal oxides and mixtures thereof allows to obtain very special effects in the resulting multilayer coating. The platelet glass flake pigment may additionally be coated with an outer protective layer to provide better protection from weathering. This layer comprises or is composed preferably of one or two metal oxide layers of the elements Si, Al or Ce. The outer protective layer may also be organic-chemically modified on the surface. By way of example, one or more silanes may be applied to this outer protective layer. The silanes may be alkylsilanes having branched-chain or unbranched alkyl radicals of 1 to 24 C-atoms, preferably 6 to 18 C-atoms.

Glass flakes contained in the composition preferably have a specific aspect ratio. The aspect ratio is the ratio of the size of the glass flakes in different dimensions, in this case, the ratio of the thickness to the particle size. Favourably, the platelet glass flake pigment has an aspect ratio of 10 to 2,000, preferably 15 to 500, very preferably 17 to 200. The glass flakes used in composition thus have a very small thickness in relation to the particle size. This facilitates parallel orientation to the substrate, resulting in a higher quality appearance and sparkle of the cured layer even when very low amounts of the platelet glass pigment are included in composition.

In the context of the present invention also a mixture of platelet pigments can be included in the coating composition. Preferably, but not exclusively, the platelet pigments have the same base platelet material, like glass or aluminium, but show different colors. As an example, a mixture of several glass flake pigments with colors such as blue and green can be included in the inventive coating composition.

In the coating composition of the present invention, the platelet effect pigment is present in an amount of from 0.001 weight-% to 5.00 weight-%, based on the total weight content of the composition.

The amount of the platelet pigment included in the coating composition of the present invention depends mainly on the nature of the pigment. Some pigments, especially some with high sparkle and/or with a high aspect ratio, only need to be present in very low amounts to give the best effect in the final clear coat, while other pigments need to be included in higher amounts to give the desired effect. Generally, a skilled person can find the best amount through usual trials. As a guideline, it should be observed that the color of the underlying basecoat should still contribute to the overall color impression of the final coating, or put in other words, the clear coat made by the coating of the present invention should not have such a high pigment content that the color of the underlying basecoat is no longer discernible.

Definitions of weight-% are given either in relation to the total weight content of the coating composition, i.e. all components including solvents of the final coating composition as it is being applied to the car body, or in relation to the total solids content, i.e. the sum of all solid components of the coating composition including binders, crosslinkers, pigments and solid additives, without solvents.

"Solids content" as used herein refers to the non-volatile components of the resin, curing agent, pigment, and the like remaining in the paint composition after drying the paint composition at 120° C for 1 hour. For example, the total solids content of the paint composition can be calculated as follows. The paint composition is measured in a heat-resistant container such as an aluminium foil cup, spread at the bottom of the container, and then dried at 120° C for 1 hour, after which the mass of the components in the paint composition remaining after drying is measured to determine the ratio of the mass of the components remaining after drying with respect to the total mass of the paint composition before drying.

Ratios of component's weight percentage are given in respect to the weight percentage of the additives and each is relating to the same total content as stated in the respective passage. By definition, the ratios are without unit.

In a preferred embodiment of the present coating composition the ratio of rheology control additive to dispersant additive is between 10.0 : 1.0 and 17.0 : 1.0, and preferably is between 12.0 : 1.0 and 15.0 : 1.0, based on the respective solid content in weight-% of the rheology control additive and the dispersant additive of the clear coat composition.

In the above ranges, the advantageous effects of having a very good wet clear coating performance including viscosity stability, settling resistance, levelling properties, application properties and film formation properties, and at the same time giving excellent dry-film properties to the final clear coat film like high sparkle, good adhesion, good pigment orientation and distribution, good DOI, are especially well achieved.

In a further embodiment of the inventive coating composition the composition also comprises a polyester, polyurethane, another acrylic and/or a melamine resin as additional binder(s).

The additional binder(s) can be chosen from a wide spectrum of well-known binders for automotive coating and they are selected by their contribution in view of beneficial features like surface hardness, chemical resistance, surface impact resistance, adhesion, humidity resistance, and/or solvent resistance of the final clear coat film. Further, the additional binder(s) can help to avoid any impact of the pigments in the clear coat in terms of impairing the weatherability.

In a further embodiment of the inventive coating composition the rheology control additive is present in form of a modification of the 1K or 2K acrylate binder system.

With the combination of the rheology additive and the binder there is a good distribution and compatibility of the rheology additive in the coating composition achieved which aids the workability of the composition as well as providing a good shelf life.

In a further preferred embodiment of the inventive coating composition the rheology control additive is present an amount of between 0.4 and 0.8 weight-%, preferred in an amount of around 0.6 weight-%, based on the total content of the composition.

With the preferred range of content of the rheology control additive in the inventive clear coat composition good appearance in vertical and horizontal direction of the resulting coating film is achieved, and uneven distribution of solid components is prohibited.

The rheology control agent in this content range has a fine crystalline structure and forms a dense network in the clear coating composition to exert sag control capability (also referred as quick freezing), thus improving the sag resistance during coating and the finished appearance of the resulting coating film. Further, the fine crystalline structure and the claimed content range improves the solubility during the coating film formation; therefore, a coating film excellent in water blushing resistance is formed.

If an amount too high is used, a bad orientation of the platelet effect pigment is shown, as well as a crispy effect of the resulting coating film.

At too low contents of the rheology control additive sagging of the coating composition, segregation of particles by gravity, and also bad orientation of the platelet pigments occur.

In a further preferred embodiment of the inventive coating composition the isocyanate hardener component of the binder system is present in a content of between 30.0 and 40.0 weight-%, preferably in a content of between 33.0 and 38.0 weight-%, more preferred in a content of around between 34.0 and 35.0 weight-%, based on the total solids content of the composition.

With a hardener content in the claimed range a NCO/NCO-reactive functional group ratio between 0.9 and 1.1 is achieved which is seen to be an optimal ratio for crosslinking the binder component. A hardener amount too low would with decreasing content amount lead to a water sensitivity of the final clear coat layer due to low crosslinking. A hardener amount being too high would, with increasing amount of the hardener lead to an excess of hardness, brittleness, and no flexibility of the resulting clear coat film. In another aspect, the hardener is a small molecule, and thus generally lowering the viscosity of coating composition which also plays into the balance of dispersant additive and rheology control additive. The hardener has also an impact pigment orientation and therefore, the claimed range of isocyanate hardener amount is showing best results for the claimed pigmented clear coating composition.

In a further preferred embodiment of the inventive coating composition the overall binder content is between 45 and 65 weight-%, preferred between 52 and 58 weight-%, more preferred around 55 weight-%, based on the total weight of the composition.

With the claimed range of overall binder solid content a good applicability with standard OEM equipment of the clear coating composition is achieved. This results in a good transfer efficiency and levelling of the coating film, as well as resulting in a very good appearance of the final multilayer coating.

A too low overall binder solid content of the coating composition would show a bad transfer efficiency during application as more volume for the same thickness would be needed, and furthermore, the cost efficiency is for the car manufacturer regarding the coating composition and also regarding the application process would be thus impaired.

In a further preferred embodiment of the inventive coating composition the dispersant additive is a polyurethane-based high molecular weight block copolymer.

The dispersant additive is especially a cationic polyurethane-based high molecular weight block copolymer, and it provides electrical charge to pigments and stabilizes by means of steric hindrance.

The choice of dispersant additive depends on the nature of the pigments and if the coating is a waterborne or solvent-borne system. Dispersants are offered for organic and inorganic pigment systems and for both solvent- and waterborne systems, but for the coating composition of the present invention especially such dispersant additives that suit the needs of a solventborne binder system and also acts well with the platelet pigments included are of importance. Pigment dispersion is one of the most important, critical and complex steps in coating composition manufacture. A first factor of the right choice of dispersant additive is the additive's influence upon wetting and dispersing properties; the second factor is the summation of the additive's influence upon all the properties within the formulated coating system. With the type of dispersant additive of the claimed preferred embodiment, very good results in compatibility with the platelet pigments and also with the solventborne type of the clear coating composition of the present invention can be achieved. Suitable examples of such dispersant additives are well known to the skilled person and commercially available, for instance under the tradename Disperbyk^{®} by the BYK company.

In a further preferred embodiment of the inventive coating composition the dispersant additive is present in an amount of between 0.1 and 0.3 weight-%, preferred in an amount of around 0.2 weight-%, based on the total content of the composition.

Generally, the amount of dispersant additive is kept low in order to reduce the impact of reduction of viscosity of the composition that has to be compensated by the rheology additive.

However, as the dispersant is also vital to keep the pigment and the other solid components of the composition dispersed, the claimed amount is seen to best to achieve the high requirements of the automobile industry in terms of even distribution and non-segregation of the solid components of the clear coat composition.

Amounts higher than the claimed range can with increasing amount impair intercoat adhesion and weather resistance of the final dried coating, as well as cause possible migration effects on the surface, which show as a kind of bleeding or exudation effect leading to a reoccurringly hazy distortion of the optics of the final clear coat.

Amounts lower than the claimed range with decreasing amount can lead to agglomeration and/or sedimentation of pigments and other particulate ingredients of the composition, to poor levelling of the surface by application and film forming, and to surface roughness of the final dried coating film.

The clear coating composition of the present invention may also further contain extender pigments, ultraviolet absorbers, light stabilizers, catalysts, antifoaming agents, anticorrosives, surface-adjusting agents, and the like.

Examples of ultraviolet absorbers include known ultraviolet absorbers, such as benzotriazole absorbers, triazine absorbers, salicylic acid derivative absorbers, benzophenone absorbers, and like ultraviolet absorbers. These ultraviolet absorbers may be used singly, or in a combination of two or more. When the paint composition of the present invention contains an ultraviolet absorber, the amount of the ultraviolet absorber is generally within the range of 0.1 to 10 weight-%, preferably 0.2 to 5 weight-%, and more preferably 0.3 to 2 weight-%, based on the total solids content in the paint composition. Examples of light stabilizers include known light stabilizers, such as hindered amine light stabilizers.

The hindered amine light stabilizer for use is preferably a hindered amine light stabilizer having low basicity from the viewpoint of the pot life. Examples of such hindered amine light stabilizers include acylated hindered amines, amino ether-based hindered amines, and the like. Specific examples include HOSTAVIN 3058 (trade name, produced by Clariant), TINUVIN 123 (trade name, produced by BASF), and the like. When the paint composition of the present invention contains a light stabilizer, the amount of the light stabilizer is generally within the range of 0.1 to 10 weight-%, preferably 0.2 to 5 weight-%, and more preferably 0.3 to 2 weight-%, based on the total solids content in the coating composition.

Examples of catalysts include known catalysts. For example, when the clear coating composition of the present invention contains the polyisocyanate compound and/or blocked polyisocyanate compound mentioned above as the crosslinking agent, the clear coating composition of the present invention may contain a urethanization reaction catalyst. Specific examples of urethanization reaction catalysts include organometallic compounds, such as tin octylate, dibutyltin diacetate, dibutyltin di(2-ethylhexanoate), dibutyltin dilaurate, dioctyltin diacetate, dioctyltin di(2-ethylhexanoate), dibutyltin oxide, dibutyltin sulfide, dioctyltin oxide, dibutyltin fatty acid salts, lead 2-ethylhexanoate, zinc octylate, zinc naphthenate, zinc fatty acid salts, bismuth octanoate, bismuth 2-ethylhexanoate, bismuth oleate, bismuth neodecanoate, bismuth versatate, bismuth naphthenate, cobalt naphthenate, calcium octylate, copper naphthenate, and tetra(2-ethylhexyl)titanate; tertiary amine; and the like. These may be used singly, or in a combination of two or more. When a melamine resin described above is used as the crosslinking agent in the clear coating composition of the present invention, the clear coating composition of the present invention may contain, as a curing catalyst, p-toluenesulfonic acid, dodecylbenzenesulfonic acid, dinonylnaphthalene sulfonic acid, or like sulfonic acid; monobutyl phosphate, dibutyl phosphate, mono(2-ethylhexyl) phosphate, di(2-ethylhexyl) phosphate, or like alkyl phosphoric esters; a salt of such an acid with an amine compound; or the like. When the clear coating composition of the present invention contains a curing catalyst for the melamine resin, it is preferred that the amount of the curing catalyst for the melamine resin is within the range of 0.1 to 2 weight-%, preferably 0.2 to 1.7 weight-%, and more preferably 0.3 to 1.4 weight-%, based on the total solids content in the coating composition of the present invention.

The present invention also related to a coating film made from a coating composition according to the invention, wherein the coating film is the topmost clear coating of a multilayer automotive coating, applied in a wet-on-wet technology to a basecoat coating and baked simultaneously.

The method of applying a coat containing the clear coating composition of the present invention as topmost layer is not particularly limited. For example, air spray coating, airless spray coating, rotary atomization coating, curtain coating, or other coating methods can be used to form a wet coating film. In these coating methods, an electrostatic charge may be applied, if necessary. Of these methods, air spray coating or rotary atomization coating is particularly preferred. The coating of the present invention is generally preferably applied to a cured film thickness of 10 to 70 µm, and more preferably 20 to 60 µm. In particular, the cured film thickness is preferably 25 to 50 µm, and particularly preferably 35 to 45 µm.

When air spray coating, airless spray coating, or rotary atomization coating is performed, it is preferred that the coating of the present invention be appropriately adjusted in advance by adding an organic solvent to have a viscosity suitable for coating, which is generally from 15 to 60 seconds, and preferably 20 to 40 seconds, as measured with a Ford Cup No. 4 viscometer at 20° C.

Application of automotive coatings in a wet-on-wet technology and subsequent simultaneous baking (also referred to as heat curing) is well known in the art. A wet-on-wet coating system imparts a few enhanced performance aspects compared to conventional coatings, like interlayer adhesion. The interlayer adhesion force between layers is superior to that of the conventional coating system because of the homogeneity of layers during application. The wet layers bond with each other to a greater extent than the solid and wet layers, which increases overall performance. Single baking saves a significant amount of energy. The application time is also reduced as all the layers are applied layer by layer and exposed to heating at once.

In a preferred embodiment of the invention the coating film has a light transmittance of 30% to 95% at a wavelength of 400 to 700 nm.

Light transmittance is the measurement of the amount of light energy that glass or other materials can absorb, reflect, and scatter. Essentially, transmittance can give an accurate calculation for the amount of light a material disperses and its ability to block photons. Light transmittance is usually determined according to ISO 13486-1:2019. The standard covers the determination of the total luminous transmittance, in the visible region of the spectrum (i.e. at a wavelength of 400 to 700nm), of planar transparent and substantially colourless plastics, using a single-beam photometer with a specified CIE Standard light source and photodetector.

Total luminous transmittance can also be determined by a double-beam spectrophotometer as in ISO 13468-2.

In the preferred embodiment, the resulting coating film of the pigmented clear coat according to the invention although pigmented shows a very good light transmittance in the visible region of the spectrum so that the color of the underlying basecoat layer is well observable and adds to the sparkle of the clear coat layer in order to give a very high quality with an unprecedented depth of sparkle and color as the final appearance of the automotive coating.

The present invention further related to a multilayer automotive coating comprising a topmost coating made from an inventive coating composition, comprising in the following sequence:
- a substrate,
- optionally a primer layer,
- at least one basecoat layer, and
- the clear coat layer,
wherein the clear coat layer is the topmost clear coating of the multilayer automotive coating, and wherein the at least one basecoat layer and the clear coat layer are applied in a wet-on-wet technology and baked simultaneously.

The substrate to be coated with the clear coating composition of the present invention is not particularly limited. Examples of the substrates include exterior panel parts of automotive bodies such as for passenger cars, trucks, motorcycles, and buses; automotive parts; exterior panel parts of household electric appliances such as cellular phones and audio equipment; and the like. The exterior panel parts of automotive bodies and automotive parts are particularly preferable.

The material for the substrate is not particularly limited. Examples include metallic materials, such as iron, aluminium, brass, copper, tin plate, stainless steel, galvanized steel, steel plated with a zinc alloy (Zn-AI, Zn-Ni, Zn-Fe, or the like); plastic materials, such as polyethylene resins, polypropylene resins, acrylonitrile-butadiene-styrene (ABS) resins, polyamide resins, acrylic resins, vinylidene chloride resins, polycarbonate resins, polyurethane resins, epoxy resins, and like resins, and various types of FRP; inorganic materials, such as glass, cement, and concrete; wood; textile materials (e.g., paper and cloth); and the like. Of these materials, metallic materials and plastic materials are preferable.

The substrate may be a metallic material mentioned above or a vehicle body etc. formed from a metallic material mentioned above that has been subjected to a surface treatment, such as a phosphoric acid salt treatment, chromate treatment, or composite oxide treatment. The substrate may also be a metallic material, vehicle body, or the like mentioned above on which an undercoating film of various electrodeposition paint has been formed. The substrate may also be a metallic material, vehicle body, or the like mentioned above on which an undercoating film of various electrodeposition paint has been formed, and an intermediate coating film has been further formed on the undercoating film. The substrate may also be a plastic material, such as a bumper, on which a primer coating film has been formed.

The method of applying a multilayer coat containing the clear coating composition of the present invention as topmost layer is not particularly limited. For example, air spray coating, airless spray coating, rotary atomization coating, curtain coating, or other coating methods can be used to form a wet coating film. In these coating methods, an electrostatic charge may be applied, if necessary. Of these methods, air spray coating or rotary atomization coating is particularly preferred. The coating of the present invention is generally preferably applied to a cured film thickness of 10 to 70 µm, and more preferably 20 to 60 µm. In particular, the cured film thickness is preferably 25 to 50 µm, and particularly preferably 35 to 45 µm.

When air spray coating, airless spray coating, or rotary atomization coating is performed, it is preferred that the coating of the present invention be appropriately adjusted in advance by adding an organic solvent to have a viscosity suitable for coating, which is generally from 15 to 60 seconds, and preferably 20 to 40 seconds, as measured with a Ford Cup No. 4 viscometer at 20° C.

The wet coating film obtained by applying the coating of the present invention to a substance can be cured by heating. Heating can be performed by known heating means. For example, a drying furnace, such as a hot air furnace, an electric furnace, or an infrared induction heating furnace, can be used. The heating temperature is not particularly limited, and is, for example, within the range of 60 to 160° C., and preferably 80 to 140° C. The heating time is not particularly limited, and is, for example, within the range of 10 to 60 minutes, and preferably 15 to 30 minutes.

The method for forming a multilayer coating in which the clear coating composition of the present invention is applied as topmost clear coat is a method for forming a multilayer coating film comprising sequentially forming on a substrate at least one layer of colored basecoat and one layer of clear coat composition, wherein the clear coating composition of the present invention is applied as the clear coating composition for forming the uppermost layer.

Specific examples of such a method include a method for forming a multilayer coating by a 2-coat 1-bake method, in which a colored basecoat composition is applied to a substrate onto which an electrodeposition coating film and/or intermediate coating film has been previously applied, the resulting uncured coating film is, if necessary, preheated at, for example, 40 to 90° C. for about 3 to 30 minutes to accelerate the vaporization of the solvent in the colored basecoat composition, but not cured, and the clear coating composition of the present invention is then applied as clear coat to the uncured colored basecoat, followed by simultaneous curing of the colored basecoat film and the clear coat film.

The clear coating composition of the present invention can also be suitably used as top clear coat for top-coating in a 3-coat 2-bake method or a 3-coat 1-bake method.

The basecoat composition used in the above manner may be a commonly known thermosetting basecoat. Specific examples include compositions obtained by appropriately combining a crosslinking agent, such as an amino resin, a polyisocyanate compound, or a blocked polyisocyanate compound, with reactive functional groups of a base resin, such as an acrylic resin, a polyester resin, an alkyd resin, or a urethane resin. As the basecoat composition, for example, aqueous paint, organic solvent-based paint, or powder paint can also be used. From the viewpoint of the finished appearance of the coating film and a reduction in the environmental load, aqueous basecoat paint is preferable, especially urethan-based or acrylate-based basecoats.

## Claims

1. Clear coat composition to be applied as a topmost layer in an automotive multilayer coating comprising a 1K or 2K binder system, a non-aqueous solvent, a platelet effect pigment, a rheology control additive, and a dispersant additive, wherein the 1K or 2K binder system is an acrylate binder system, wherein the platelet effect pigment is present in an amount of from 0.001 weight-% to 5.00 weight-%, based on the total content of the composition, wherein the rheology control additive is a crystalline polyurea-based compound, **characterized in that**
the ratio of rheology control additive, given in weight-%, to dispersant additive, given in weight-%, is between 5.0 : 1.0 and 20.0 : 1.0, based on the respective solid content in weight-% of the rheology control additive and the dispersant additive of the clear coat composition.

2. Composition according to claim 1, wherein the ratio of rheology control additive to dispersant additive is between 10.0 : 1.0 and 17.0 : 1.0, and preferably is between 12.0 : 1.0 and 15.0 : 1.0, based on the respective solid content in weight-% of the rheology control additive and the dispersant additive of the clear coat composition.

3. Composition according to claim 1 or 2, wherein the composition also comprises a polyester, another acrylic and/or a melamine resin as additional binder(s).

4. Composition according to any of claims 1 or 3, wherein the rheology control additive is present in form of a modification of the 1K or 2K acrylate binder system.

5. Composition according to any of claims 1 or 4, wherein the rheology control additive is present an amount of between 0.4 and 0.8 weight-%, preferred in an amount of around 0.6 weight-%, based on the total content of the composition.

6. Composition according to any of claims 1 or 5, wherein the isocyanate hardener component of the 2K binder system is present in a content of between 30.0 and 40.0 weight-%, preferably in a content of between 33.0 and 38.0 weight-%, more preferred in a content of around between 34.0 and 35.0 weight-%, based on the total solids content of the composition.

7. Composition according to any of claims 1 or 6, wherein the overall binder solid content is between 45 and 65 weight-%, preferred between 52 and 58 weight-%, more preferred around 55 weight-%, based on the total weight of the composition.

8. Composition according to any of claims 1 or 7, wherein the dispersant additive is a polyurethane-based high molecular weight block copolymer.

9. Composition of any of claims 1 or 8, wherein the dispersant additive is present in an amount of between 0.1 and 0.3 weight-%, preferred in an amount of around 0.2 weight-%, based on the total content of the composition.

10. Coating film made from a coating composition according to any of the claims 1 to 9, wherein the coating film is the topmost clear coating of a multilayer automotive coating, applied in a wet-on-wet technology to a basecoat coating and baked simultaneously.

11. Coating according to claim 9 wherein the coating film has a light transmittance of 30 to 95% at a wavelength of 400 to 700 nm.

12. Multilayer automotive coating comprising a topmost coating made from a coating composition as claimed in claims 1 to 9, comprising in the following sequence:
• a substrate,
• optionally a primer layer,
• at least one basecoat layer, and
• the clear coat layer,
wherein the clear coat layer is the topmost clear coating of the multilayer automotive coating, and wherein the at least one basecoat layer and the clear coat layer are applied in a wet-on-wet technology and baked simultaneously.
